# EUROPÄISCHE PATENTSCHRIFT

(11) **EP 1 342 055 B1**
(45) Veröffentlichungstag und Bekanntmachung des Hinweises auf die Patenterteilung: **15.08.2007**
(21) Anmeldenummer: 01989044.1
(22) Anmeldetag: 27.11.2001
(51) Int. Cl.: G01C 21/36, B60K 37/04

(54) **VERFAHREN UND VORRICHTUNG ZUR DARSTELLUNG VON INFORMATIONEN**
METHOD AND DEVICE FOR THE DISPLAY OF INFORMATION
PROCEDE ET DISPOSITIF DE REPRESENTATION D'INFORMATIONS

(30) Priorität: 02.12.2000 DE 10060008; 21.11.2001 DE 10156912
(43) Veröffentlichungstag der Anmeldung: 10.09.2003
(73) Patentinhaber: Volkswagen Aktiengesellschaft, 38436 Wolfsburg (DE); Traveltainer Beteiligungs GmbH, 63808 Haibach (DE)
(72) Erfinder: SCHNIER, Carsten, 38259 Salzgitter (DE); LUX, Stefan, 38527 Meine (DE); FALK, Dörte, 38106 Braunschweig (DE); FELDMANN, Rolf, 64859 Eppertshausen (DE); HEIDEMANN, Uwe, 63739 Aschaffenburg (DE)
(86) Internationale Anmeldenummer: PCT/EP2001/013803
(87) Internationale Veröffentlichungsnummer: WO 2002/055336

(56) Entgegenhaltungen:
- EP-A- 0 795 433
- WO-A-00/41090
- WO-A-99/05616
- FR-A- 2 793 935
- US-A- 5 610 821
- US-A- 6 138 072
- PATENT ABSTRACTS OF JAPAN vol. 2000, no. 14, 5. März 2001 (2001-03-05) -& JP 2000 322694 A (DENSO CORP), 24. November 2000 (2000-11-24)

## Beschreibung

Die Erfindung betrifft ein Verfahren zur Darstellung einer Webseite auf einem Display in einem Kraftfahrzeug nach dem Oberbegriff des Anspruchs 1 und eine Vorrichtung zur Durchführung des Verfahrens nach dem Oberbegriff des Anspruchs 10, der aus dem Dokument US 6 138 072 bekannt ist.

In heutigen Kraftfahrzeugen existieren eine Vielzahl von Komponenten, die Informationen an den Fahrer vermitteln und akustische und optische Signale erzeugen, wodurch der Fahrer in seiner Konzentration auf den Straßenverkehr abgelenkt werden kann. Neben dem klassischen Autoradio mit seinen Verkehrsnachrichten sind dies mittlerweile beispielsweise Navigationssysteme mit optischer und akustischer Zielführung, mit Freisprecheinrichtungen versehene Mobiltelefone, d.h. Autotelefone, und Multifunktions-Anzeigeeinheiten mit wechselnden graphischen Oberflächen. Zur Darstellung von Stadtplänen, Straßenkarten, Fahrtrouten und sonstiger optischer Information ist daher im Kraftfahrzeug ein Farbdisplay geeigneter Größe angeordnet, das die Darstellung von Fernseh- und Videobildern erlaubt.

Internet und Intranet sind wichtige Instrumente zur schnellen Informationsbeschaffung und zur Nutzung von Dienstleistungen geworden. Die Darstellung von Information aus dem Netz, d.h. von Webseiten, im Kraftfahrzeug stößt jedoch aus ergonomischen Gründen auf Schwierigkeiten, da beispielsweise hell leuchtende Bildschirmdarstellungen in der Nacht zu einer Blendung des Fahrers führen können. Die Darstellung von ins Internet gestellten Webseiten erfolgt jedoch immer in der Farbgebung, wie sie vom Webseitenanbieter vorgegeben wurde. Dieses kann dazu führen, daß die Lesbarkeit und Darstellung von Webseiten einigen Anwendungen nicht gerecht werden kann, da derzeit die Farben von Webseiten nicht anpaßbar sind, ohne Gefahr zu laufen, daß die Anpassung einer anderen Webseite mit dem gleichen Verfahren dazu führt, daß diese Webseite nicht mehr lesbar ist, beispielsweise, weil Schrift und Hintergrundfarbe plötzlich identisch oder ähnlich sind und dadurch gar kein oder nur ein schlechter Kontrast zustande kommt.

Der Erfindung liegt daher die Aufgabe zugrunde, Informationen aus dem Internet oder Intranet auf einem Display eines Kraftfahrzeugs so darzustellen, daß der Fahrer die Information möglichst sicher aufnehmen kann.

Diese Aufgabe wird durch ein Verfahren nach Anspruch 1 und eine Vorrichtung nach Anspruch 10 gelöst. Bevorzugte Ausgestaltungen der Erfindung sind Gegenstand der Unteransprüche.

Bei dem erfindungsgemäßen Verfahren zur Darstellung von einer Website auf einem Display in einem Kraftfahrzeug, wobei die Information in einer vorgegebenen Gestaltung vorliegt, wird die Gestaltung der Information mittels eines Datenverarbeitungsprozesses in Abhängigkeit von einer Steuerinformation verändert und die Information in geänderter Gestaltung auf der Anwendungsseite dargestellt.

Es handelt sich bei der Information um eine Webseite, die über eine Kommunikationsverbindung von dem Datenverarbeitungsprozeß auf einem Webserver zur Anwendung in das Kraftfahrzeug übertragen wird. Zur Änderung oder Anpassung der Webseite bzw. der optischen Information wird von der Anwendung die Steuerinformation an den Datenverarbeitungsprozeß übertragen. Die Steuerinformation enthält insbesondere Information bzw. Informationen über die gegenwärtige Situation bzw. Zustand des Kraftfahrzeugs. Dabei wird der Begriff Kraftfahrzeugsituation durch eine Anzahl von Parametern beschrieben, wie beispielsweise Kraftfahrzeuggeschwindigkeit, Kurvengeschwindigkeit, Kurvenkrümmung, Straßenzustand, Verkehrsdichte, Fahrsituation, Beschleunigung oder Verzögerung, Position, Neigungswinkel, Umgebungshelligkeit, Umgebungstemperatur und Witterung, etc..

Die durch den Datenverarbeitungsprozeß veränderte Gestaltung der Webseite wird hinsichtlich ihres Inhalts, Layouts, ihrer Schriftgröße, Farbgebung und/oder einzelner oder mehrerer Bildteile verändert.

Zur Übermittlung der Steuerinformation können Cookies sowie Metatags im HTTP-Request verwendet werden oder eine geeignete Parameterliste wird an die URL angehängt. Es ist ferner möglich, daß die Änderung der Farbe einer Webseite von einer im Quelltext der Webseite befindlichen Metatag-Angabe abgeleitet wird.

Die Steuerinformation kann beispielsweise aus einem manuellen Eingabeereignis und/oder den Werten eines oder mehrerer Signalgeber oder Sensoren erzeugt werden.

Eine Vorrichtung zur Durchführung des erfindungsgemäßen Verfahrens weist ein Display, ein Steuergerät, eine Kommunikationsvorrichtung zur Verbindung mit beispielsweise dem Internet und Sensoren und/oder Signalgebern zur Ermittlung der Kraftfahrzeugsituation auf.

Eine bevorzugte Ausführungsform der Erfindung wird nachfolgend anhand einer Zeichnung näher erläutert, die eine Vorrichtung zur Durchführung des erfindungsgemäßen Verfahrens zeigt.

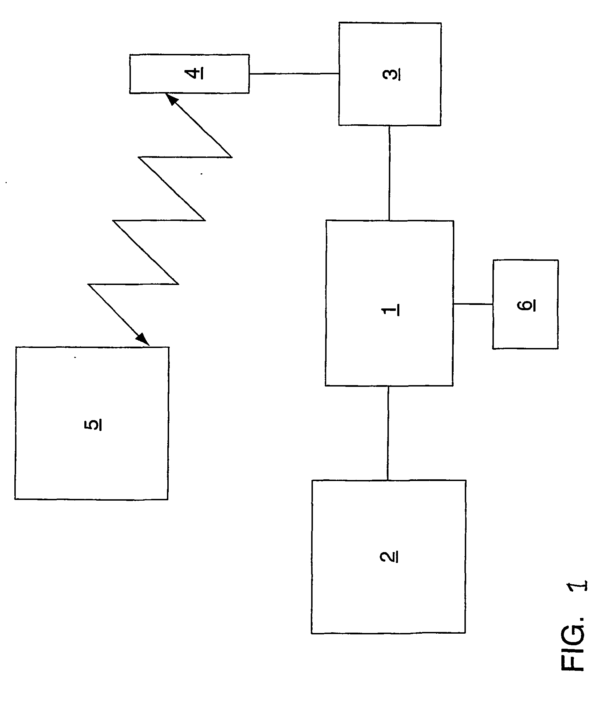

Die Figur zeigt eine Steuerung 1 mit einem mit dieser verbundenen Display 2. Die Steuerung 1 ist mit einem Internet-Modul 3, auf dem eine Anwendung läuft, verbunden, wobei das Internet-Modul 3 über eine Mobilstation 4 mit entsprechender Antenne in einem mobilen Kommunikationsnetz eingebucht ist und mit einem Datenverarbeitungsprozeß (nicht dargestellt) auf einem Web-Server 5 kommuniziert. Ferner ist die Steuerung 1 mit diversen Sensoren und Signalgebern verbunden, die hier zusammenfassend mit Bezugszeichen 6 bezeichnet sind.

Das Verfahren der hier zugrunde liegenden Erfindung ermöglicht es insbesondere, daß die Webseiten für eine Anwendung, bei der die äußere Erscheinung in Form von Heiligkeit und Farbgebung bedeutend ist, anpaßbar sind, so daß im folgenden im wesentlichen auf die Anpassung der Farbe eingegangen wird. Es ist jedoch offensichtlich, daß auch andere Gestaltungselemente wie Schriftgröße, Layout, etc., der Webseite mittels des Verfahrens unter Verwendung geeigneter Parameter der Kraftfahrzeugsituation veränderbar sind.

Beim Aufruf von Webseiten besteht eine Kommunikationsverbindung zwischen einem Datenverarbeitungsprozess (kurz DVP) auf dem Webserver und der Anwendung. Dieser Kommunikationsweg kann von der Anwendung dafür verwendet werden, um dem DVP mittels einer Steuerinformation mitzuteilen, daß eine andere Farbgebung für eine Webseite gewünscht wird. Der DVP kann nun aufgrund dieser Steuerinformation eine andere situationsgerechte Farbgebung der Webseite erzeugen und diese der Anwendung zur Verfügung stellen. Voraussetzung hierfür ist, daß ein solches Verfahren vom DVP unterstützt wird. Das Kommunikationsverfahren kann z.B. a) mit Parametern, welche an die Webadresse (URL) angehängt werden, b) mit sogenannten Cookies, c) mit Metatags auf der Webseite oder d) einer Metatag-Erweiterung im HTTP-Request, realisiert werden.

Im Fall a) kann der DVP auf dem Webserver aus den an die URL angehängten Parametern die Steuerinformationen ableiten und die Webseite direkt beim Aufruf in der von der Anwendung geforderten Farbgebung erzeugen und übertragen.

Im Fall b) wird vom DVP auf dem Webserver beim ersten Aufruf der Webseite ein Cookie zur Anwendung übertragen. Mit Hilfe des Cookies hat der DVP während einer stehenden Kommunikationsverbindung mit der Anwendung die Möglichkeit, die notwendigen Steuerinformationen von der Anwendung abzufragen und kann daraufhin Webseiten mit entsprechender Farbgebung erzeugen und übertragen.

Im Fall c) befindet sich ein zusätzliches Metatag im Quellcode der Webseite. Anhand dieses Metatags kann die Anwendung gleichzeitig erkennen, ob die Webseite einen hier beschriebenen Mechanismus für die Farbanpassung unterstützt. Ergänzend zu dieser Information wird dann eine Webadresse im Metatag angegeben, die zu einer alternativen Webseite mit anderer Farbgebung führt und beispielsweise automatisch aufgerufen wird. Auf diese Art kann mit der Steuerinformation, die in einer Anwendung je nach den Verhältnissen in der Anwendungsumgebung erzeugt wird, eine bereits in der Anzeigevorrichtung befindliche Webseite in der Farbdarstellung aktualisiert werden.

Der Fall d) ist ähnlich dem Fall a), wobei der DVP auf dem Webserver hierbei die Steuerinformationen aus den Metatags des HTTP-Requests ableiten kann.

Die hier aufgeführten Verfahren sind kompatibel zu den heute verwendeten Webtechnologien und können eingesetzt werden, ohne das Konflikte mit Browsern oder Webseiten entstehen, die dieses Verfahren nicht unterstützen.

Der einfachste Anwendungsfall wäre die Anforderung einer hellen oder dunklen Webseite durch die Anwendung. In der weiteren Ausgestaltung dieses Verfahrens kann die Steuerinformation äquivalente Werte zur Umgebungshelligkeit enthalten. Diese können vom DVP auf dem Webserver verwendet werden, um die Helligkeit oder Farbgebung der Webseite vollkommen auf die anwendungsorientierte Gegebenheit abzustimmen. Dabei kann die Umgebungshelligkeit über einen Lichtsensor, der sich im Umfeld der Anwendung befindet, gemessen werden.

Eine solche Farbanpassung kann auch über einen separaten Webservice realisiert werden, der im Internet verfügbar gemacht wird oder als Webservice direkt in der Anwendung läuft. Die Aufgabe eines solchen Webservices liegt darin, diese Farbanpassung als zentralen DVP anzubieten und durchzufahren. Dieses hat den Vorteil, dass nicht jede bestehende Webseite im Internet diese Funktionalität berücksichtigen müßte, aber mit Hilfe dieses zentralen Webservices dennoch eine Farbanpassung jeder Webseite möglich wäre.

Die Erzeugung solcher farbangepaßten Webseiten auf dem Webserver kann mittels dynamischer Webseitenerzeugung in einem DVP auf einem Webserver realisiert werden, das heißt, ein Webserver muß nicht für jede mögliche Farbkombination eine entsprechende Webseite bereithalten, sondern erzeugt diese universell für die jeweilige Webseitenanfrage. Hierzu kann ein Berechnungsprogramm zur Farbbestimmung verwendet werden oder, im einfachsten Fall, könnte der DVP zwei feste Farbvarianten unterstützen, beispielsweise für Tag- und für Nachtdarstellung.

In einem Kraftfahrzeug wird bei Tag, insbesondere auch wegen der Sonneneinstrahlung, eine sehr helle, kontrastreiche Farbgebung gewünscht und in der Nacht eine äußerst geringe Helligkeit mit dunklen Farben und Flächen gefordert. Mit dem geschilderten Verfahren können diese Probleme bei der Darstellung von Webseiten im Fahrzeug gelöst werden. Das Fahrzeug kann beispielsweise die Lichtschalterstellung oder den Meßwert eines Lichtsensors im Fahrzeug zum DVP übertragen und damit die benötigte Steuerinformation für Tag oder Nachtbetrieb liefern, woraufhin der DVP die Webseite in der entsprechenden Farbdarstellung erzeugt. Ferner kann der DVP die Farbgebung nach der Uhrzeit gegebenenfalls unter zusätzlicher Einbeziehung der Position des Fahrzeugs anpassen. Anhand dieser Informationen und der Jahreslichtverhältnisse kann ebenfalls eine automatische Anpassung der Farbdarstellung realisiert werden. Da das Internet mit mobilem Datenzugang im Fahrzeug für Routenplanung, Verkehrsmeldungen, Off-Bord Navigation, Einzug hält, ist eine derartige Farbanpassung einer Webseite für den Fahrer eines Kraftfahrzeugs eine sinnvolle funktionale Erweiterung.

### BEZUGSZEICHENLISTE

- 1: Steuerung
- 2: Display
- 3: Internet-Modul
- 4: Mobilstation
- 5: Web-Server
- 6: Sensoren und Signalgeber

## Patentansprüche

1. Verfahren zur Darstellung einer Webseite auf einem Display in einer Anwendung eines Kraftfahrzeugs, wobei die Webseite in einer vorgegebenen Gestaltung vorliegt und über einen Kommunikationsverbindung von einem Datenverarbeitungsprozeß auf einem Webserver zur Anwendung in das Kraftfahrzeug übertragen wird, und wobei die Anwendung eine Steuerinformation an den Datenverarbeitungsprozeß überträgt und die Steuerinformation Information über die Situation des Kraftfahrzeugslenthält, **dadurch gekennzeichnet, daß** die Gestaltung der Webseite bezüglich des Inhalts, des Layouts, der Schriftgröße, der Farbgebung und/oder einzelner oder mehrerer Bildteile mittels des Datenverarbeitungsprozesses in Abhängigkeit von der Steuerinformation verändert und die Webseite in geänderte Gestaltung auf der Anwendungsseite dargestellt wird, wobei bei Änderung der Farbgebung die Änderung der Farbe einer Webseite von einer im Quelltext der Webseite befindlichen Metatag-Angabe abgeleitet wird.

2. Verfahren nach Anspruch 1, **dadurch gekennzeichnet, daß** die Kraftfahrzeugsituation einen oder mehreren der folgenden Parameter wie Kraftfahrzeuggeschwindigkeit, Kurvengeschwindigkeit, Kurvenkrümmung, Straßenzustand, Verkehrsdichte. Fahrsituation, Beschleunigung oder Verzögerung, Position, Neigungswinkel, Umgebungshelligkeit, Umgebungstemperatur und Witterung aufweist.

3. Verfahren nach Anspruch 2, **dadurch gekennzeichnet, daß** die Farbgebung hinsichtlich einem oder mehreren der Farbparameter Farbe, Farbton. Farbsättigung, und Helligkeit geändert wird.

4. Verfahren nach Anspruch 2 oder 3, **dadurch gekennzeichnet, daß** die Hintergrundfarbe und/oder Hintergrundgestaltung der Information geändert wird.

5. Verfahren nach Anspruch 3, **dadurch gekennzeichnet, daß** die Schriftfarbe oder Schriftfarben geändert werden.

6. Verfahren nach einem der vorangegangenen Ansprüche, **dadurch gekennzeichnet, daß** zur Übermittlung der Steuerinformation Cookies verwendet werden.

7. Verfahren nach einem der Ansprüche 1 bis 5, **dadurch gekennzeichnet, daß** zur Übermittlung der Steuerinformation Metatags im HTTP-Request verwendet werden.

8. Verfahren nach einem der Ansprüche 1 bis 5, **dadurch gekennzeichnet, daß** zur Übermittlung der Steuerinformation eine Parameterliste an die URL angehängt wird.

9. Verfahren nach einem der vorangegangenen Ansprüche, **dadurch gekennzeichnet, daß** die Steuerinformation aus einem manuellen Eingabeereignis und/oder den Werten eines oder mehrerer Signalgeber erzeugt wird.

10. Vorrichtung zur Darstellung einer Webseite auf einem Display in einer Anwendung eines Kraftfahrzeugs mit einem Display (2), einem Steuergerät (1), einer Kommunikationsvorrichtung (3, 4) und Sensoren und/oder Signalgebern (6) zur Ermittlung der Kraftahrzeugsituation, wobei die Webseite in einer vorgegebenen Gestaltung vorliegt und über einen Kommunikationsverbindung von einem Datenverarbeitungsprozeß auf einem Webserver zur Anwendung in das Kraftfahrzeug übertragen wird, und wobei die Anwendung eine Steuerinformation an den Datenverarbeitungsprozeß übertragt und die Steuerinformation Information über die Situation des Kraftfahrzeugs enthält, **dadurch gekennzeichnet, daß** die Gestaltung der Webseite bezüglich des Inhalts, des Layouts, der Schriftgröße, der Farbgebung und/oder einzelner oder mehrerer Bildteile mittels des Datenverarbeitungsprozesses in Abhängigkeit von der Steuerinformation verändert und die Webseite in geänderte Gestaltung auf der Anwendungsseite dargestellt wird, wobei bei Änderung der Farbgebung die Änderung der Farbe einer Webseite von einer im Quelltext der Webseite befindlichen Metatag-Angabe abgeleitet wird.

## Claims

1. Method for representing a web page on a display in an application in a motor vehicle, wherein the web page is present in a predefined form and is transmitted by a data processing process on a web server via a communications link to the application in the motor vehicle, and wherein the application transmits control information to the data processing process, and the control information contains information about the situation of the motor vehicle, **characterized in that** the form of the web page is changed in terms of the content, the layout, the size of the script, the colour and/or one or more parts of the image by means of the data processing process as a function of the control information and the web page is represented on the application page in a changed form, wherein, when the colour changes, the change of the colour of a web page is derived from a Meta tag data item located in the source text of the web page.

2. Method according to Claim 1, **characterized in that** the situation of the motor vehicle has one or more of the following parameters such as motor vehicle speed, cornering speed, curvature of a corner, road state, traffic density, driving situation, acceleration or deceleration, position, angle of inclination, ambient brightness, ambient temperature and weather.

3. Method according to Claim 2, **characterized in that** the colour is changed in terms of one or more of the colour parameters of colour, colour tone, colour saturation and brightness.

4. Method according to Claim 2 or 3, **characterized in that** the background colour and/or background form of the information is changed.

5. Method according to Claim 3, **characterized in that** the colour or colours of the script are changed.

6. Method according to one of the preceding claims, **characterized in that** cookies are used to transmit the control information.

7. Method according to one of Claims 1 to 5, **characterized in that** Meta tags are used to transmit the control information in the HTTP request.

8. Method according to one of Claims 1 to 5, **characterized in that** a parameter list is attached to the URL in order, to transmit the control information.

9. Method according to one of the preceding claims, **characterized in that** the control information is generated from a manual input event and/or the values of one or more signal transmitters.

10. Device for representing a web page on a display in an application in a motor vehicle having a display (2), a control device (1), a communications device (3, 4) and sensors and/or signal transmitters (6) for determining the situation of the motor vehicle, wherein the web page is present in a predefined form and is transmitted by a data processing process on a web server via a communications link to the application in the motor vehicle, and wherein the application transmits control information to the data processing process, and the control information contains information about the situation of the motor vehicle, **characterized in that** the form of the web page is changed in terms of the content, the layout, the size of the script, the colour and/or one or more parts of the image by means of the data processing process as a function of the control information and the web page is represented on the application page in a changed'form, wherein, when the colour changes, the change of the colour of a web page is derived from a Meta tag data item located in the source text of the web page.

## Revendications

1. Procédé de représentation d'une page Web sur un afficheur pour une utilisation dans un véhicule automobile, la page Web existant sous une conformation définie et étant transmise par l'intermédiaire d'une liaison de communication à partir d'un processus de traitement de données sur un serveur Web vers le véhicule automobile pour l'utilisation, et l'utilisation transmettant une information de commande au processus de traitement de données et l'information de commande contenant des informations sur la situation du véhicule automobile, **caractérisé en ce que** la conformation de la page Web concernant le contenu, la disposition, la taille des caractères, la coloration et/ou des parties d'images individuelles ou multiples est modifiée par le processus de traitement de données en fonction de l'information de commande et que la page Web est affichée sous la conformation modifiée sur la page de l'utilisation, la modification de la coloration découlant de la modification de la couleur d'une page Web à partir d'une commande de balise Méta située dans le texte source de la page Web.

2. Procédé selon la revendication 1, **caractérisé en ce que** la situation du véhicule automobile présente un ou plusieurs des paramètres suivants comme la vitesse du véhicule automobile, la vitesse en virage, la courbure du virage, l'état de la route, la densité du trafic, la situation de conduite, l'accélération ou le ralentissement, la position, l'angle d'inclinaison, l'éclairage ambiant, la température ambiante et les conditions atmosphériques.

3. Procédé selon la revendication 2, **caractérisé en ce qu'**on modifie la coloration pour ce qui concerne un ou plusieurs des paramètres de couleurs comme couleur, nuance, saturation et luminosité.

4. Procédé selon la revendication 2 ou 3, **caractérisé en ce qu'**on modifie la couleur du fond et/ou la conformation du fond de l'information.

5. Procédé selon la revendication 3, **caractérisé en ce qu'**on modifie la couleur des caractères ou les couleurs des caractères.

6. Procédé selon une des revendications précédentes, **caractérisé en ce**'qu'on utilise des Cookies pour la transmission de l'information de commande.

7. Procédé selon une des revendications 1 à 5, **caractérisé en ce qu'**on utilise des balises Méta dans la requête http pour la transmission de l'information de commande.

8. Procédé selon une des revendications 1 à 5, **caractérisé en ce qu'**on attache une liste de paramètres à l'URL pour la transmission de l'information de commande.

9. Procédé selon une des revendications précédentes, **caractérisé en ce que** l'information de commande est générée par un événement saisi manuellement et/ou par les valeurs d'un ou plusieurs transmetteurs de signaux.

10. Dispositif de représentation d'une page Web sur un afficheur pour une utilisation dans un véhicule automobile avec un afficheur (2), un équipement de commande (1), un dispositif de communication (3, 4) et des capteurs et/ou transmetteurs de signaux (6) pour déterminer la situation du véhicule automobile, la page Web existant sous une conformation définie et étant transmise par l'intermédiaire d'une liaison de communication à partir d'un processus de traitement de données sur un serveur Web vers le véhicule automobile pour l'utilisation, et l'utilisation transmettant une information de commande au processus de traitement de données et l'information de commande contenant des informations sur la situation du véhicule automobile, **caractérisé en ce que** la conformation de la page Web concernant le contenu, la disposition, la taille des caractères, la coloration et/ou des parties d'images individuelles ou multiples est modifiée par le processus de traitement de données en fonction de l'information de commande et que la page Web est affichée sous la conformation modifiée sur la page de l'utilisation, la modification de la coloration découlant de la modification de la couleur d'une page Web à partir d'une commande de balise Méta située dans le texte source de la page Web.
